(19) Europäisches Patentamt
European Patent Office
Office européen des brevets

(11) EP 2 154 220 B1

(12) # EUROPEAN PATENT SPECIFICATION

(45) Date of publication and mention of the grant of the patent:
**26.01.2011 Bulletin 2011/04**

(51) Int Cl.:
***C09J 133/00*** *(2006.01)*

(21) Application number: **09009523.3**

(22) Date of filing: **22.07.2009**

(54) **Re-releasable adhesive agent and re-releasable adhesive sheet**

Erneut lösbares Klebemittel und erneut lösbare Klebefolie

Agent adhésif amovible et feuille d'adhésif amovible

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **31.07.2008 JP 2008197212**

(43) Date of publication of application:
**17.02.2010 Bulletin 2010/07**

(73) Proprietor: **Nitto Denko Corporation**
**Ibaraki-shi,**
**Osaka 567-8680 (JP)**

(72) Inventors:
- **Habu, Takashi**
  **Ibaraki-shi**
  **Osaka 567-8680 (JP)**
- **Takahashi, Tomokazu**
  **Ibaraki-shi**
  **Osaka 567-8680 (JP)**
- **Asai, Fumitero**
  **Ibaraki-shi**
  **Osaka 567-8680 (JP)**
- **Hirayama, Takamasa**
  **Ibaraki-shi**
  **Osaka 567-8680 (JP)**

(74) Representative: **Hager, Thomas Johannes**
**Hoefer & Partner**
**Patentanwälte**
**Pilgersheimer Strasse 20**
**81543 München (DE)**

(56) References cited:
**US-A1- 2005 191 456** **US-A1- 2007 141 330**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 154 220 B1

## Description

BACKGROUND OF THE INVENTION

1. Field of the Invention

The present invention relates to a re-releasable adhesive agent and a re-releasable adhesive sheet, and more specifically relates to a re-releasable adhesive sheet used in the process of manufacturing various kinds of semiconductor device, and to a re-releasable adhesive agent that forms an adhesive layer on the sheet.

2. Background Information

As wafers have become larger and the wafers used in IC card applications and so forth have become thinner in recent years, radiation-curing adhesive sheets have been used in the manufacturing process of various kinds of semiconductor device to work these semiconductors.
These adhesive sheets are used in many different applications, such as protecting the surface of a semiconductor wafer, or fixing a semiconductor wafer, in the steps of semiconductor wafer etching, washing, etc., in a back-grinding step in which the rear face of a semiconductor wafer is ground, in a dicing step in which a semiconductor wafer is cut and divided and the chips thus obtained are automatically recovered by pick-up system, and so forth.
Radiation-curing adhesives are generally prepared by suitably using a macromolecular compound called a base polymer (a main polymer), a radiation-polymerizable compound having carbon-carbon double bonds in a molecule with a weight average molecular weight of 20,000 or less (such as a radiation-reactive oligomer), and a radiation-polymerizable initiator as essential components, and adding a crosslinking agent or any of various other additives to them. So-called polyfunctional compounds having two or more carbon-carbon double bonds per molecule are used as radiation-polymerizable compounds. When a radiation-curing adhesive with a composition such as this is irradiated with radiation, the radiation-polymerizable compound quickly reacts and forms a three-dimensional network structure, the entire adhesive undergoes sudden reaction and curing, and the adhesive strength can be sharply decreased.
With these adhesive sheets, however, in addition to being easily peelable, they need to be equipped with various functions as dictated by the applications, such as those listed above.
For instance, if the reaction and curing of the components that constitute the adhesive cause volumetric shrinkage in the adhesive itself, the resulting shrinkage stress will cause the semiconductor wafer to warp, separate, etc., and expandability cannot be ensured in an adhesive sheet used for pick-up in a dicing step, so there has been a need to minimize such shrinkage.
In response to this, adhesives have been proposed that minimize volumetric shrinkage of the adhesive itself caused by the curing of the adhesive (see. Patent reference: Japanese Patent Laid-open Publication No. 2000-355678, for example).
However, when a semiconductor wafer that has been fixed with one of the above-mentioned adhesive sheets is etched, washed, etc., the semiconductor wafer and the adhesive sheet are exposed to acidic and alkaline chemicals, detergents, and so forth, and there has been a need for an adhesive sheet that will not be modified, broken, etc., by this exposure, so that the semiconductor wafer will continue to be securely fixed, which was not achievable with conventional adhesives.

SUMMARY OF THE INVENTION

It is an object of the present invention to provide a re-releasable adhesive agent with which adhesive strength can be sufficiently decreased by a curing reaction brought on by irradiation, and liquid permeability can be reduced so as to minimize the reduction of adhesive strength or the breaking of the adhesive by liquids and so forth, as well as the contaminating of the semiconductor wafer or the like.
It is another object of the present invention to provide a re-releasable adhesive sheet in which this re-releasable adhesive agent is used.
The present invention provides with a re-releasable adhesive agent comprising a radiation-reactive polymer and a radiation polymerization initiator,
the radiation-reactive polymer has a side chain derived from at least one monomer expressed by the formula (1):

$$CH_2=CR^1COOR^2 \qquad (1)$$

wherein $R^1$ is a hydrogen atom or a methyl group, and $R^2$ is a $C_6$ or higher alkyl group,
and a side chain having one carbon-carbon double bond, and
the monomer of formula (1) is contained in a ratio of less than 50 mol% with respect to the total monomer constituting

a main chain of the radiation-reactive polymer.

Further, the present invention provides with a re-releasable adhesive sheet having an adhesive layer composed of a re-releasable adhesive on the base film, the re-releasable adhesive comprising a radiation-reactive polymer and a radiation polymerization initiator, the radiation-reactive polymer has a side chain derived from at least one monomer expressed by the formula (1):

$$CH_2{=}CR^1COOR^2 \qquad (1)$$

wherein $R^1$ is a hydrogen atom or a methyl group, and $R^2$ is a $C_6$ or higher alkyl group,
and a side chain having one carbon-carbon double bond, and
the monomer of formula (1) is contained in a ratio of less than 50 mol% with respect to the total monomer constituting a main chain of the radiation-reactive polymer.

According to the re-releasable adhesive agent of the present invention, the adhesive strength can be sufficiently decreased by a curing reaction brought on by irradiation, and liquid permeability can be reduced so as to minimize the reduction of adhesive strength or the breaking of the adhesive by liquids and so forth.
Also, with the re-releasable adhesion of the present invention, because an adhesive having the above-mentioned characteristics is used, it is possible to minimize the contaminating of a semiconductor wafer or the like and the deterioration of fixing of a semiconductor wafer or the like caused by the permeation of a liquid or the like into the adhesive.

## BRIEF DESCRIPTION OF THE DRAWINGS

FIG. 1 is a diagram describing method for measuring a shrinkage force produced by the curing brought on by irradiation to an adhesive layer.
FIG. 2 is a diagram describing method for evaluating a liquid permeability.
FIG. 3 is a graph showing liquid permeable time of Examples and Comparative Examples.
FIG. 4 is a diagram describing method for measuring a wafer warpage.

## DETAILED DESCRIPTION OF THE PREFERRED EMBODIMENTS

The re-releasable adhesive agent of the present invention is made up of a radiation-reactive polymer and a radiation-polymerizable initiator. There are no particular restrictions on the radiation referred to here, so long as it is able to cure the polymer, but examples include X rays, ultraviolet rays, electron beams, and the like.

The radiation-reactive polymer is one or more types of monomer expressed by the formula (1):

$$CH_2{=}CR^1COOR^2 \qquad (1)$$

wherein $R^1$ is a hydrogen atom or a methyl group, and $R^2$ is a $C_6$ or higher alkyl group.
That is, it includes a side chain derived from an alkyl (meth)acrylate.
The alkyl here has at least six carbons. A carbon number of about 30 or less is suitable when availability of raw materials, ease of manufacture, ability to reduce chemical permeation, and other such factors are taken into account. Examples of the alkyl include hexyl, heptyl, octyl, nonyl, ethylhexyl, puropylhexyl, and the like.

This alkyl (meth)acrylate is preferably such that the monomer is polymerized in a ratio of at least 50 mol% of the total monomer constituting the main chain of the radiation-reactive polymer. This is because when a radiation-reactive polymer is used in the form discussed below as a re-releasable adhesive agent, it is effective at adequately suppressing permeation by chemicals and so forth into the adhesive.

Also, the radiation-reactive polymer includes a side chain having one carbon-carbon double bond, that is, one radiation-reactive double bond.
Materials having carbon-carbon double bonds in the polymer molecule are already known, but in the present invention this refers to having just one carbon-carbon double bond on one single side chain bonded to the main chain constituting the polymer molecule (that is, the chain with the highest carbon number, which is the trunk of the polymer's carbon skeleton).

This side chain having one carbon-carbon double bond preferably has a chain length of at least six atoms. When availability of raw materials, ease of manufacture, reduction of shrinkage force, and so forth are taken into account, an atom number of about 30 or less is favorable.
The chain length referred to here means the length of the side chain within the polymer molecule, and refers to a number of atoms in the straight chain part so as to maximize the number of bonds of atoms other than hydrogen atoms (such

as atoms that can bond with two or more atom groups or other atoms, such as carbon atoms, oxygen atoms, nitrogen atoms, or the like). For instance, with the polymer shown below, the length of the side chain is 13.

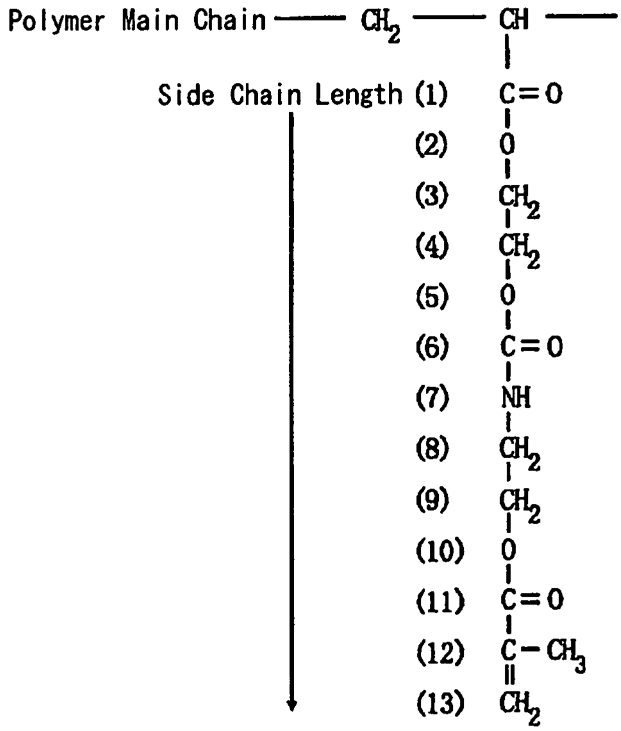


The bond distance of C-C is generally 1.54 Å, the bond distance of C-O 1.43 Å, the bond distance of C-N 1.47 Å, and the bond distance of C=C 1.37 Å. Therefore, from a different perspective, the side chain having a carbon-carbon double bond preferably has a chain length of about 8 Å or more, and preferably about 8.2 Å or more, and more preferably about 8.5 Å or more, about 9 Å or more, about 9.2 Å or more. Also, it preferably has a chain length of about 45 Å or less, and more preferably about 40 Å or less, and more preferably about 35 Å or less.

The effect of having such the chain length is that the polymer is not stiff after the radiation curing reaction, and shrinkage force can be reduced. If there are two or more carbon-carbon double bonds on the single side chain of the polymer molecule (the number of so-called functional groups in the radiation-reactive polymer), the radiation curing reaction will form an excessive three-dimensional network structure, and after curing, the polymer molecule will be stiff and the shrinkage force will be high.

The monomer for inducing this side chain in order to introduce a side chain having one carbon-carbon double bond preferably is polymerized in a ratio of less than 50 mol% with respect to the total monomer constituting the main chain of the radiation-reactive polymer, and more preferably is polymerized in a ratio of 40 mol% or less, and even more preferably 5 to 31 mol%. This is because if a radiation-reactive polymer is used in the form discussed below as a re-releasable adhesive agent, the permeation of chemicals and the like into the adhesive will be sufficiently suppressed, while the shrinkage force of the polymer itself can be effectively reduced.

The radiation-reactive polymer may be any polymer capable of exhibiting adhesion, but an acrylic polymer is preferable in terms of ease of molecular design and so forth.

Examples of a monomer component of acrylic polymers include an alkyl (meth)acrylates having linear or branched alkyl groups with 30 or fewer carbons, and preferably 4 to 18 carbons, such as methyl, ethyl, propyl, isopropyl, butyl, isobutyl, s-butyl, t-butyl, pentyl, isopentyl, hexyl, heptyl, octyl, 2-ethylhexyl, isooctyl, nonyl, isononyl, decyl, isodecyl, undecyl, dodecyl, tridecyl, tetradecyl, hexadecyl, octadecyl, and eicocyl, as well as cycloalkyl (meth)acrylate, such as cyclopentyl (meth)acrylate, cyclohexyl (meth)acrylate. These alkyl (meth)acrylates can be used alone or as mixture of more than two components.

The radiation-reactive polymer may include another monomer (or oligomer) that can be copolymerized with an alkyl (meth)acrylate or cycloalkyl (meth)acylate, as a comonomer unit as needed, for the purpose of modifying the cohesive force, heat resistance, and so on.

Examples of such monomer (or oligomer) include;

carboxyl-containing monomer such as acrylic acid, methacrylic acid, carboxyethyl (meth)acrylate, carboxypentyl (meth)acrylate, itaconic acid, maleic acid, fumaric acid, and crotonic acid;
acid anhydride monomer such as maleic anhydride, itaconic anhydride;
hydroxyl group-containing monomer such as 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 10-hydroxydodecyl (meth)acrylate, 12-hydroxyrauryl (meth)acrylate, 4-hydroxymethyl cyclohexyl methyl(meth)acrylate, N-methylol (meth)acrylamide, vinylalcohol, allylalcohol, 2-hydroxyetylvinylether, 4-hydroxybutylvinylether, dietylenegltcol monovinylether;
sulfonate-containing monomer such as styrenesulfonate, allylsulfonate, 2-(meth) acrylamide-2-methyl propanesulfonate, (meth)acrylamide propanesulfonate, sulfopropyl (meth)acrylate, (meth)acryloyl oxynaphthalenesulfonate;
phosphate-containing monomer such as 2-hydroxyethyl acryloylphosphate;
epoxy-containing monomer such as glycidyl (meth)acrylate, allyl glycidyl ether;
vinyl esther such as vinyl acetate;
aromatic vinyl such as stylene;
vinylether such as vinylethylether, and the like.

An nitrogen-containing monomer as a monomer (or oligomer) include, for example, cyano-containing monomer such as acrylonitrile; amide-containing monomer such as acrylamide; amino-containing monomer such as N,N-dimethylamino ethyl (meth)aclylate; isocyanate-containing monomer as described bellow.
These monomer components can be used alone or as mixture of more than two components.

The amount in which the copolymerizable other monomer (or oligomer) is used is suitable at least 0.1 mol%, and preferably about 0.1 to 30 mol%, of the total monomer constituting the main chain of the radiation-reactive polymer.

The radiation-reactive polymer may also include a polyfunctional monomer or the like as needed as a comonomer unit, for the purpose of crosslinking and so on.
Examples of the polyfunctional monomer include hexanediol di(meth)acrylate, (poly)ethylene glycol di(meth)acrylate, (poly)propylene glycol di(meth)acrylate, neopentylglycol di(meth)acrylate, pentaerythritol di(meth)acrylate, trimethylolpropane tri(meth)acrylate, pentaerythritol tri(meth)acrylate, dipentaerythritol hexa(meth)acrylate, epoxy(meth)acrylate, polyester (meth)acrylate, urethane (meth)acrylate and the like. These polyfunctional monomer components can be used alone or as mixture of more than two components.

In terms of adhesion characteristics and so forth, the amount in which the polyfunctional monomer is used is preferably no more than 30 mol% of the total monomer constituting the main chain of the radiation-reactive polymer.

A radiation-reactive polymer is obtained by polymerizing a single monomer or a mixture of two or more monomers. The polymerization can also be any method such as solution polymerization, emulsion polymerization, mass polymerization, suspension polymerization.

Any method known in this field can be used to introduce a side chain having one carbon-carbon double bond into this radiation-reactive polymer.
For example, for ease of molecular design and so forth, it is preferable to use a method in which a polymer having a functional group $\alpha$ on a side chain is synthesized by copolymerizing using a monomer already having a reactive functional group *a* (polymerizable compound) as a comonomer component, after which this polymer and a compound having one carbon-carbon double bond and a functional group *b* and having reactivity to the functional group *a* are reacted (condensation, addition reaction, etc.) while this carbon-carbon double bond is preserved.

Examples of the functional groups *a* and *b* include a carboxyl group, acid anhydride group, hydroxyl group, amino group, epoxy group, isocyanate group, and aziridine group. These can be suitably selected in a combination that allows mutual reactions. Examples of the combination of the function groups *a* and *b* include a combination of a carboxyl group and an epoxy group, a carboxyl group and an aziridine group, a hydroxyl group and an isocyanate group, as well as a carboxyl group and hydroxyl group. It does not matter which is the functional group *a* (or the functional group b) in these combinations.

A compound having one carbon-carbon double bond, a functional group *a*, and a functional group *b* can be suitably selected from among the compounds having corresponding functional groups listed above as examples of the monomer constituting an acrylic polymer.

Examples of a compound having a monomer with an isocyanate group as functional group *a*, having an isocyanate group as functional group b, and having one carbon-carbon double bond include isocyanate compounds having a (meth)acryloyl group in the molecule, such as methacryloyl isocyanate and 2-methacryloyloxyethyl isocyanate; and isocyanate compounds having a vinyl group-containing aromatic ring in the molecule, such as m-isopropenyl-$\alpha$,$\alpha$-dimethylbenzylisocyanate.

Particularly in terms of ease of reaction tracking, the combination of functional group *a* and functional group *b* is favorably a combination of a hydroxyl group and an isocyanate group.
For example, the radiation-reactive polymer of the present invention can be obtained by
polymerizing a monomer mixture including as a comonomer component which is a polymerizable ester compound having a hydroxyl group in its molecule, such as a hydroxyalkyl (meth)acrylate (2-hydroxyethyl (meth)acrylate, 2-hydroxypropyl (meth)acrylate, 4-hydroxybutyl (meth)acrylate, 6-hydroxyhexyl (meth)acrylate), or a polymerizable ether compound having a hydroxyl group in its molecule, such as 2-hydroxyethylvinyl ether, 4-hydroxybutylvinyl ether, or diethylene glycol monovinyl ether, or
polymerizing a monomer mixture including as a comonomer component which is a vinyl ester such as vinyl acetate, and then saponifying to synthesize a polymer having a side chain containing a hydroxyl group, and then reacting this polymer with the above-mentioned isocyanate compound having one carbon-carbon double bond.

Also, a combination of a carboxyl group and an epoxy group may be used as the combination of functional group *a* and functional group b.
For example, a radiation-reactive polymer can be obtained by polymerizing a monomer mixture including as a comonomer component which is a polymerizable unsaturated carboxylic acid, such as (meth)acrylic acid, to synthesize a polymer having a side chain containing a carboxyl group, and then reacting this polymer with an epoxy compound having one carbon-carbon double bond, such as glycidyl (meth)acrylate.

The number average molecular weight of the radiation-reactive polymer in the present invention is, for example, about 200,000 to 3,000,000, and preferably about 250,000 to 1,500,000.

Any radiation polymerization initiator that is known in this field can be used as the one contained in the re-releasable adhesive agent of the present invention.
As a photopolymerization initiator which may be combine in a UV rays curing system, examples include acetophenone compounds such as
α-ketol compounds such as 4-(2-hydroxyethoxy) phenyl(2-hydroxy-2-propyl) ketone, α-hydroxy-α,α'-dimethyl acetophenone, 2-methyl-2-hydroxypropyophenon, 1-hydroxycyclohexyl phenyl ketone;
acetophenone compounds such as methoxy acetophenone, 2,2-dimethoxy-2-phenyl acetophenone, 2,2-diethoxy acetophenone, 2-methyl-1-[4-(methyltio)phenyl]-2-morpholinoprophane-1;
benzoine ether compounds such as benzoine ethyl ether, benzoine isopropyl ether, anisoin methyl ether;
ketal compounds such as benzyldimethyl ketal;
aromatic sulfonyl chloride compounds such as 2- naphthalene sulfonyl chloride;
light-active oxime compounds such as 1-phenon-1,1-propanedione -2- (o-ethoxycarbonyl) oxime;
benzophenone compounds such as benzophenone, benzoylbenzoate, 3,3'-dimethyl-4-methoxybenzophenone;
thioxanthone compounds such as thioxanthone, 2-chlorothioxanthone, 2-methylthioxanthone, 2,4-dimethylthioxanthone, isopropylthioxanthone, 2,4-dichlorothioxanthone, 2,4-diethylthioxanthone, 2,4-diisopropylthioxanthone;
camphor chinone; ketone halide; acyl phosphinoxide; acyl phosphonate and the like.
These components can be used alone or as mixture of more than two components.

The amount in which the radiation polymerization initiator is contained is about 1 to 10 weight parts per 100 weight parts of the radiation-reactive polymer.

The re-releasable adhesive agent of the present invention may further include radiation-reactive oligomer (radiation-curable oligomer).
Any kinds of an oligomer such as urethane, polyether, polyester, polycarbonate, polybutadiene can be used as needed. These components can be used alone or as mixture of more than two components.
If a radiation-reactive polymer which can fully exhibit a property of adhesion redaction is used, these oligomers do not necessarily use.

The amount in which the radiation-reactive oligomer is contained, about 0.1 to 150 weight parts, and preferably about 1 to 100 weight parts, and more preferably about 5 to 60 weight part per 100 weight parts of the radiation-reactive polymer. Keeping the amount within this range prevents the viscosity of the adhesive itself not to decrease too much, and ensure freestanding as an adhesive sheet without any free-flowing at formation of an adhesive layer of the adhesive sheet.

An additive such as a crosslinking agent may also be added to the re-releasable adhesive agent of the present invention.
Example of the crosslinking agent include any crosslinking agent that is known in this field, for example, epoxy compounds, aziridine compounds, isocyanate compounds (e.g., polyisocyanate, etc.) and the like.

The shrinkage force produced by the curing reaction brought on by irradiation is preferably small in the re-releasable adhesive agent of the present invention. The "shrinkage force" here is the shrinkage force after irradiation curing of the adhesive alone, as measured by cantilever (the force generated when the material shrinks under curing by irradiation), and can be measured by the following method.

As shown in FIG. 1, for example, an adhesive layer B serving as a sample is affixed to a phosphor bronze plate A (length: 200 mm; width: 20 mm; thickness: 200 μm; JIS C 5210), and the plate is set up horizontally, fixed at one end in the lengthwise direction thereof.
After this, the sample is irradiated for 60 seconds with ultraviolet rays from the adhesive layer B side (ultraviolet irradiation apparatus (example): NEL UM-110, produced by Nitto Seiki), and then returned to normal temperature, after which the vertical displacement $\delta$ from the starting position is measured, and the shrinkage force $\sigma$ is calculated from the following equations (1 $kg/mm^2$ = 9.8 MPa).

$$\rho = (L^2/8\delta) + \delta/2 \approx (L^2/8\delta)$$

$$\sigma = (E_1 h_1^3/12h_2) \times 2/\rho\ (h_1 + h_2) \times \{1 + (h_1/(h_1 + h_2)^2/3)\}$$

wherein, ρ: radius of curvature (mm) of cantilever, σ: internal stress (shrinkage force) ($kg/mm^2$), $E_1$: Young's modulus ($kg/mm^2$) of phosphor bronze plate, $h_1$: thickness (mm) of phosphor bronze plate, h2: thickness (mm) of adhesive layer, L/2: distance (mm) between support and point of measurement, and δ: displacement amount (mm) of test piece.

A more specific example of the shrinkage force is 30 MPa or less (e.g., about 0.01 to 30 MPa), and preferably 25 MPa or less (e.g., about 0.01 to 25 MPa).

This shrinkage force can be adjusted, for example, by appropriately changing the type, length, and introduced amount of the side chain, the molecular weight of the radiation-reactive polymer, and the added amount of the radiation-reactive oligomer.

Keeping the shrinkage force within this range prevents the wafer or other bonding substrate from warping, for example, when the adhesive layer is cured by radiation. Also, it ensures sheet expandability when the adhesive sheet having this adhesive layer is used as the adhesive sheet for dicing a semiconductor wafer, for example.

It has been confirmed that the re-releasable adhesive agent of the present invention satisfies the above-mentioned shrinkage force and yields the above-mentioned effects.

The re-releasable adhesive sheet of the present invention has an adhesive layer composed of the re-releasable adhesive agent described above on a base film.

The adhesive sheet can be prepared by applying an adhesive composition containing the re-releasable adhesive agent on the base film, and drying.

The adhesive sheet may also be prepared by applying an adhesive composition containing the re-releasable adhesive agent on a suitable separator (e.g., stripping sheet, etc.), drying, and reprinting (transferring) this to the base film.

There are no particular restrictions on the base film but any base film that is known in this field can be used.

Examples of the base film which is used for a wafer grinding protective sheet include a plastic film such as polyester film (polyethylene terephthalate (PET) film, polybutylene terephthalate (PBT) film, polybutylene naphthalate film); polyolefin film (biaxial drawing polypropylene (OPP) film, low-density polyethylene (PE) film, any nonrigid polyolefin film); ethylene-vinyl acetate copolymer (EVA) film; and a multilayer film containing thereof. Among these, PET film, a multilayer film containing PET film, OPP film which are effective for suppressing a wafer warpage are preferable.

Examples of the base film which is used for a wafer cutting/ dividing adhesive sheet include nonrigid polyvinyl chloride film in addition to the above various films.

The thickness of the base film is, for example, about 20 to 300 μm.

The adhesive strength of the adhesive layer can be appropriately set according to the intended use and so forth. For example, if used for semiconductor wafer, it is preferable in terms of maintaining a snug fit against the semiconductor wafer, ease of peeling from the wafer, and so forth if the adhesive strength (at normal temperature, 180 degree peel value, 300 mm/min. of peel rate) is at least 100 g/20 mm of tape width, and if the adhesive strength after irradiation is no more than 40 g/20 mm of tape width, for example.

The thickness of the adhesive layer can be appropriately set, generally about 1 to 300 μm, preferably about 3 to 200 μm, and more preferably about 5 to 100 μm.

There are no particular restrictions on the shape of the adhesive sheet, which can be suitably selected according to the intended use. For example, in wafer grinding applications, an adhesive sheet which has been cut into the same shape as the wafer is preferable.

The re-releasable adhesive sheet of the present invention can be used as an adhesive tape in the manufacturing process of various semiconductors, such as in the etching, washing, and other steps to which a semiconductor wafer is subjected, in which the tape is affixed to the rear face of the semiconductor wafer to fix the wafer, or is affixed to the desired location of the semiconductor wafer to protect that part. In other words, the adhesive used in this adhesive sheet is such that even if the semiconductor wafer is exposed to a liquid, and especially an acidic or alkaline chemical, during etching, washing, etc., the adhesive will not be readily modified, dissolved, etc., by the chemical, etc. Therefore, the semiconductor wafer can be securely fixed. Also, permeation of the chemical, etc., can be reliably prevented at parts not intended to be exposed to the chemical, etc., so those surfaces can be protected.

Also, the adhesive sheet of the present invention can be used as a protective sheet that protects the surface of a semiconductor wafer in a back-grinding step, in which the rear face of a semiconductor wafer is ground, for example. Normally, when a radiation curing the adhesive sheet is irradiated with UV rays or other such radiation, the adhesive

layer of the sheet is cured and the adhesive strength decreases, so the sheet can be easily peeled from the wafer. On the other hand, when the adhesive layer is irradiated, it undergoes volumetric shrinkage, generating shrinkage force, and as a result the wafer may warp.
With the adhesive sheet of the present invention, however, because the radiation-reactive polymer having the specific side chain structure is used for the adhesive layer, the layer has suitable adhesive strength and shrinkage force can be reduced, so even when the adhesive layer is irradiated and cured, warping of the wafer can be kept to a minimum. This effect is particular pronounced when a side chain is introduced that has one carbon-carbon double bond and has the chain length of at least 6 atoms.

The re-releasable adhesive sheet of the present invention can also be used as a dicing-use adhesive tape that is used to fix a semiconductor wafer by being affixed to the rear face of the wafer in a dicing step in which the wafer is cut and divided, and the chips thus obtained are automatically recovered by pick-up system.
When the adhesive sheet of the present invention is used in applications such as this, when the wafer is irradiated after being cut, the curing of the adhesive layer lowers the adhesive strength, and the shrinkage force generated by curing of the adhesive layer is also extremely small, so good flexibility can be maintained, which means that the sheet can be expanded sufficiently, ensuring a good dicing sheet. Accordingly, the work of picking up the semiconductor chips can be carried out more smoothly.

The adhesive agent and adhesive sheet of the present invention will now be described in greater detail on the basis of examples, but the present invention is not limited by these examples.
The conditions for grinding the wafer rear face, the ultraviolet (UV) irradiation conditions, the expanding conditions, and so forth were as follows.

Method for Evaluating Chemical Permeation

As shown in FIG. 2, a pH test paper 11 was placed on a semiconductor wafer 10, and an adhesive composition 12 obtained in the various examples, etc., was laminated in a film thickness of 100 μm so as to completely cover the pH test paper 11. 2 cc of etching solution 13 was dropped onto the resulting adhesive composition 12, and the pH test paper 11 was observed to see how long it took to change color.
A solution containing a mixture of 1 % of HF, 2% of $H_2SO_4$, 3% of $HNO_3$ and 2% of $HPO_4$ was used as the etching solution (10-fold diluted form).

Condition for Wafer Grinding

Grinding Apparatus: DFG-840 produced by DISCO, Wafer: 6 inch (grinding from the thickness 600 μm to 100 μm)
Wafer bonding apparatus: DR-8500II produced by Nitto Seiki.
UV irradiation apparatus: NEL UM-110 produced by Nitto Seiki.
Integrating light quantity of UV radiation: 500 mJ/cm$^2$

Measurement of Wafer Warpage

As shown in FIG. 4, the amount of warpage of the wafer 1 after grinding and UV irradiation was found by placing the wafer on a flat surface with a protective sheet 2 affixed thereto, and measuring the distance X (mm: warpage amount) between the lifted ends.

Adhesion Strength

Adhesion strength is measured according to JIS 0237.

Example 1

A blend composition composed of 100 mol of 2-ethylhexyl acrylate and 20 mol of 2-hydroxyethyl acrylate was copolymerized in a toluene solution to obtain an acrylic copolymer having a number average molecular weight of 300,000. The side chain derived from the alkyl acrylate here had a carbon number ($R^2$ in Equation 1) of 8, and was contained in an amount of 83.3 mol% per one polymer molecule.
This copolymer was then subjected to an addition reaction with 18 mol of 2-methacryloyloxyethyl isocyanate to introduce a carbon-carbon double bond into the polymer molecule. The length of the side chain here was 13 atoms.
Next, 4 weight parts of a polyisocyanate-based crosslinking agent and 3 weight parts of an acetophenone-based photopolymerization initiator were mixed with 100 weight parts of the above polymer to prepare an adhesive composition.

This adhesive composition was used to coat a release-treated film to form an adhesive layer having a thickness of 30 μm, and the etchant permeation time was measured.
Further, this adhesive composition was used to coat an EVA film with a thickness of 115 μm to form an adhesive layer with a thickness of 30 μm and obtain an adhesive sheet. The adhesive strength of the adhesive layer of this sheet before and after irradiation was measured.
The results thus obtained are shown in Table 1 and FIG. 3.

Example 2

A blend composition composed of 75 mol of 2-ethylhexyl acrylate, 25 mol of acryloyl morpholine and 22 mol of 2-hydroxyethyl acrylate was copolymerized in a toluene solution to obtain an acrylic copolymer having a number average molecular weight of 300,000. The side chain derived from the alkyl acrylate here had a carbon number ($R^2$ in Equation 1) of 8, and was contained in an amount of 61.4 mol% per one polymer molecule.
This copolymer was then subjected to an addition reaction with 11 mol of 2-methacryloyloxyethyl isocyanate to introduce a carbon-carbon double bond into the polymer molecule. The length of the side chain here was 13 atoms.
Next, 4 weight parts of a polyisocyanate-based crosslinking agent and 3 weight parts of an acetophenone-based photopolymerization initiator were mixed with 100 weight parts of the above polymer to prepare an adhesive composition.
This obtained adhesive composition was evaluated as in the case of Example 1.
The results thus obtained are shown in Table 1.

Comparative Example 1

A blend composition composed of 50 mol of 2-ethylhexyl acrylate, 50 mol of ethylacrylate and 22 mol of 2-hydroxyethyl acrylate was copolymerized in a toluene solution to obtain an acrylic copolymer having a number average molecular weight of 300,000. The side chain derived from the alkyl acrylate here had a carbon number ($R^2$ in Equation 1) of 8, and was contained in an amount of 41 mol% per one polymer molecule.
This copolymer was then subjected to an addition reaction with 11 mol of 2-methacryloyloxyethyl isocyanate to introduce a carbon-carbon double bond into the polymer molecule. The length of the side chain here was 13 atoms.
Next, 4 weight parts of a polyisocyanate-based crosslinking agent and 3 weight parts of an acetophenone-based photopolymerization initiator were mixed with 100 weight parts of the above polymer to prepare an adhesive composition.
This obtained adhesive composition was evaluated as in the case of Example 1.
The results thus obtained are shown in Table 1.

Comparative Example 2

A blend composition composed of 50 mol of buthylacrylate, 50 mol of ethylacrylate and 22 mol of 2-hydroxyethyl acrylate was copolymerized in a toluene solution to obtain an acrylic copolymer having a number average molecular weight of 300,000. The side chain derived from the alkyl acrylate here had a carbon number ($R^2$ in Equation 1) of 4.
This copolymer was then subjected to an addition reaction with 18 mol of 2-methacryloyloxyethyl isocyanate to introduce a carbon-carbon double bond into the polymer molecule. The length of the side chain here was 13 atoms.
Next, 4 weight parts of a polyisocyanate-based crosslinking agent and 3 weight parts of an acetophenone-based photopolymerization initiator were mixed with 100 weight parts of the above polymer to prepare an adhesive composition.
This obtained adhesive composition was evaluated as in the case of Example 1.
The results thus obtained are shown in Table 1.

Table 1

| | Adhesive Strength (g/25mm) | | Chemical Permeation time (sec) (until pH1) | Wafer Warpage (mm) | |
|---|---|---|---|---|---|
| | Before Radiation | After Radiation | | Just After Grinding | After UV radiation |
| Ex.1 | 65 | 10 | 180 | 1.9 | 2.0 |
| Ex.2 | 230 | 30 | 180 | 1.9 | 2.1 |
| Comp.Ex.1 | 80 | 25 | 60 | 1.7 | 2.5 |
| Comp.Ex2 | 160 | 30 | 90 | 2.0 | 2.0 |

As seen from Table 1, with the examples, adhesive strength is decreased by irradiation enough to obtain re-release, and permeation by chemicals can be effectively suppressed. In contrast, the chemicals permeated quickly in the comparative examples.

[INDUSTRIAL APPLICABILITY]

The re-releasable adhesive agent and a re-releasable adhesive sheet of the present invention can be utilized in a wide range of applications in which a subject is diced with a laser beam guided by a liquid jet, that is, it can be applied not only to semiconductor-related materials and the like (such as semiconductor wafers, BGA packages, printed wiring boards, ceramic boards, glass member for liquid crystal devices, sheet materials, circuit boards, glass substrates, ceramics substrates, metal substrates, light-emitting and light-receiving element substrates for semiconductor laser, MEMES substrates, semiconductor packages), but to all kinds of subjects.

This application claims priority to Japanese Patent Application No. 2008-197212. The entire disclosure of Japanese Patent Application No. 2008-197212 is hereby incorporated herein by reference.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims and their equivalents. Thus, the scope of the invention is not limited to the disclosed embodiments.

## Claims

1. A re-releasable adhesive agent comprising a radiation-reactive polymer and a radiation polymerization initiator, the radiation-reactive polymer has a side chain derived from at least one monomer expressed by the formula (1):

$$CH_2=CR^1COOR^2 \qquad (1)$$

wherein $R^1$ is a hydrogen atom or a methyl group, and $R^2$ is a $C_6$ or higher alkyl group, and a side chain having one carbon-carbon double bond, and the monomer of formula (1) is contained in a ratio of less than 50 mol% with respect to the total monomer constituting a main chain of the radiation-reactive polymer.

2. The re-releasable adhesive agent of Claim 1, wherein the side chain having one carbon-carbon double bond has a chain length of at least six atoms.

3. The re-releasable adhesive agent of Claim 1, wherein the radiation-reactive polymer further comprised a side chain having a nitrogen atom.

4. The re-releasable adhesive agent of Claim 1, wherein the radiation-reactive polymer further comprised a radiation-reactive oligomer.

5. A re-releasable adhesive sheet having an adhesive layer composed of a re-releasable adhesive agent on the base film, the re-releasable adhesive agent comprising a radiation-reactive polymer and a radiation polymerization initiator, the radiation-reactive polymer has a side chain derived from at least one monomer expressed by the formula (1):

$$CH_2=CR^1COOR^2 \qquad (1)$$

wherein $R^1$ is a hydrogen atom or a methyl group, and $R^2$ is a $C_6$ or higher alkyl group, and a side chain having one carbon-carbon double bond, and the monomer of formula (1) is contained in a ratio of less than 50 mol% with respect to the total monomer constituting the main chain of the radiation-reactive polymer.

## Patentansprüche

1. Wiederlösbares Haftmittel, umfassend ein strahlungsreaktives Polymer und einen Strahlungspolymerisations-Initiator,
wobei das strahlungsreaktive Polymer eine Seitenkette, die von zumindest einem Monomer abgeleitet wird, ausgedrückt durch die Formel (1):

$$CH_2{=}CR^1COOR^2 \qquad (1)$$

wobei $R^1$ ein Wasserstoffatom oder eine Methylgruppe ist, und $R^2$ eine C6- oder höhere Alkylgruppe ist,
und eine Seitenkette mit einer Kohlenstoff-Kohlenstoff-Doppelbindung aufweist, und
das Monomer der Formel (1) in einem Verhältnis von weniger als 50 Mol% in Bezug auf das Gesamtmonomer, das eine Hauptkette des strahlungsreaktiven Polymers darstellt, enthalten ist.

2. Wiederlösbares Haftmittel nach Anspruch 1, wobei die Seitenkette mit einer Kohlenstoff-Kohlenstoff-Doppelbindung eine Kettenlänge von zumindest 6 Atomen aufweist.

3. Wiederlösbares Haftmittel nach Anspruch 1, wobei das strahlungsreaktive Polymer ferner eine Seitenkette mit einem Stickstoffatom umfasst.

4. Wiederlösbares Haftmittel nach Anspruch 1, wobei das strahlungsreaktive Polymer ferner ein strahlungsreaktives Oligomer umfasst.

5. Wiederlösbare Klebefolie mit einer Haftschicht bestehend aus einem wiederlösbaren Haftmittel auf der Basisfolie, wobei das wiederlösbare Haftmittel ein strahlungsreaktives Polymer und einen Strahlungspolymerisations-Initiator umfasst,
das strahlungsreaktive Polymer eine Seitenkette, die von zumindest einem Monomer abgeleitet wird, ausgedrückt durch die Formel (1):

$$CH_2{=}CR^1COOR^2 \qquad (1)$$

wobei $R^1$ ein Wasserstoffatom oder eine Methylgruppe ist, und $R^2$ eine C6- oder höhere Alkylgruppe ist,
und eine Seitenkette mit einer Kohlenstoff-Kohlenstoff-Doppelbindung aufweist, und
das Monomer der Formel (1) in einem Verhältnis von weniger als 50 Mol% in Bezug auf das Gesamtmonomer, das eine Hauptkette des strahlungsreaktiven Polymers darstellt, enthalten ist.

## Revendications

1. Agent adhésif libérable plusieurs fois comprenant un polymère réactif aux radiations et un initiateur de polymérisation par radiations,
le polymère réactif aux radiations comporte une chaîne secondaire dérivée d'au moins un monomère exprimé par la formule (1):

$$CH_2{=}CR^1COOR^2 \qquad (1)$$

dans laquelle $R^1$ est un atome d'hydrogène ou un groupement méthyle, et $R^2$ est un groupement $C_6$ ou un groupement alkyle supérieur,
ainsi qu'une chaîne secondaire comportant une liaison double carbone - carbone, et
le monomère de la formule (1) se trouve en un rapport inférieur à un pourcentage de 50 mol par rapport au monomère total constituant la chaîne principale du polymère réactif aux radiations.

2. Agent adhésif libérable plusieurs fois selon la revendication 1, dans lequel la chaîne secondaire comportant une liaison double carbone - carbone présente une longueur de chaîne d'au moins six atomes.

3. Agent adhésif libérable plusieurs fois selon la revendication 1, dans lequel le polymère réactif aux radiations comprend en outre une chaîne secondaire possédant un atome d'azote.

4. Agent adhésif libérable plusieurs fois selon la revendication 1, dans lequel le polymère réactif aux radiations comprend en outre un oligomère réactif aux radiations.

5. Feuille adhésive libérable plusieurs fois comportant une couche adhésive composée d'un agent adhésif libérable plusieurs fois sur le film de base,
l'agent adhésif libérable plusieurs fois comprenant un polymère réactif aux radiations et un initiateur de polymérisation par radiations,
le polymère réactif aux radiations comporte une chaîne secondaire dérivée d'au moins un monomère exprimé par la formule (1) :

$$CH_2{=}CR^1COOR^2 \qquad (1)$$

dans laquelle $R^1$ est un atome d'hydrogène ou un groupement méthyle, et $R^2$ est un groupement $C_6$ ou un groupement alkyle supérieur,
ainsi qu'une chaîne secondaire comportant une liaison double carbone - carbone, et
le monomère de la formule (1) se trouve en un rapport inférieur à un pourcentage de 50 mol par rapport au monomère total constituant la chaîne principale du polymère réactif aux radiations.

FIG. 1

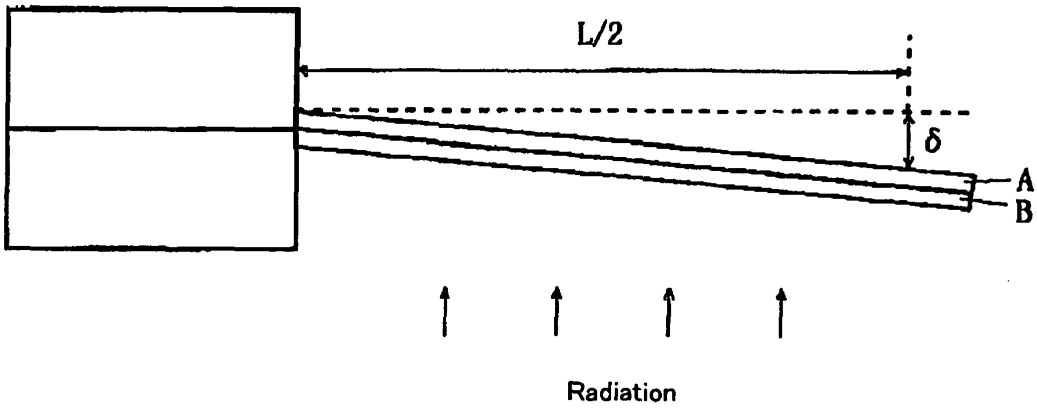


FIG. 2

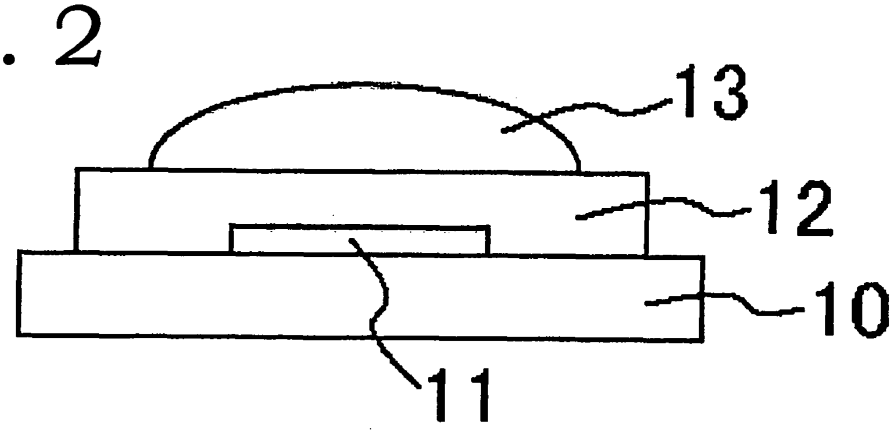

FIG. 3

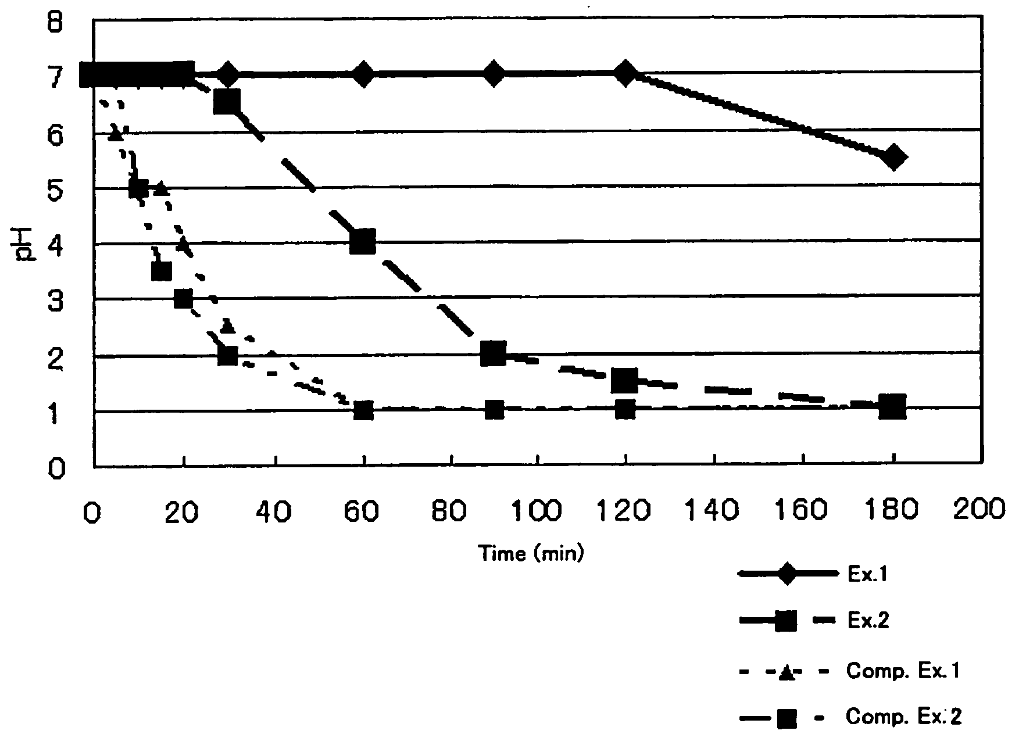
8
7
6
5
pH 4
3
2
1
0
0 20 40 60 80 100 120 140 160 180 200
Time (min)
Ex.1
Ex.2
Comp. Ex.1
Comp. Ex.2

FIG. 4

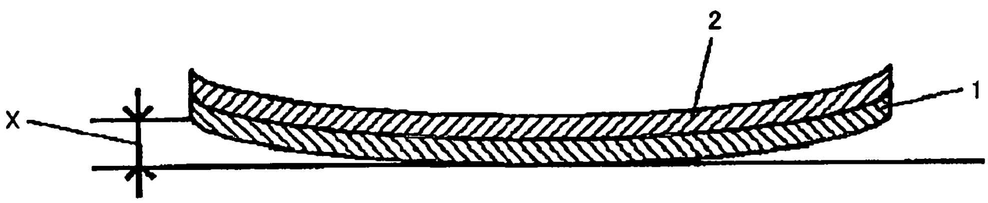
2
1
X

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000355678 A
- JP 2008197212 A